# EUROPEAN PATENT APPLICATION

(11) **EP 4 459 536 A1**
(43) Date of publication of application: **06.11.2024**
(21) Application number: 24736635.4
(22) Date of filing: 06.03.2024
(51) Int. Cl.: G06Q 30/0645, G06Q 30/06

(54) **INFORMATION PROCESSING DEVICE, CONTRACT PROPOSITION METHOD, AND INFORMATION PROCESSING SYSTEM**

(30) Priority: 14.03.2023 JP 2023039571
(71) Applicant: DAIKIN INDUSTRIES, LTD., Osaka-shi, Osaka 530-0001 (JP)
(72) Inventor: MIURA, Shu, Osaka-shi, Osaka 530-0001 (JP); KAWABE, Mari, Osaka-shi, Osaka 530-0001 (JP); TAKIGAWA, Keisuke, Osaka-shi, Osaka 530-0001 (JP); SUHARA, Ryota, Osaka-shi, Osaka 530-0001 (JP); OGURA, Ryohei, Osaka-shi, Osaka 530-0001 (JP)
(74) Representative: Hoffmann Eitle
(86) International application number: PCT/JP2024/008543
(87) International publication number: WO 2024/190563

(57) **Abstract**

An information processing device includes a control part, and the control part is configured to: obtain contract information about rental equipment rented to a user; obtain operation information about operation of the rental equipment; and offer a new contract for the user based on the contract information and the operation information.

## Description

### [Technical field]

The present disclosure relates to an information processing device, a method of offering a contract, and an information processing system.

### [Background Art]

Equipment leasing systems for equipment leasing services in which a service provider leases equipment to equipment users have been known heretofore (see, for example, Patent Document 1).

### [Related-Art Document]

### [Patent Document]

[Patent Document 1] Unexamined Japanese Patent Application Publication No. 2006-120047

### Summary of the Invention

### [Problem to be solved by the invention]

Patent Document 1 discloses an equipment leasing service for renting equipment, in which the service fees are re-assessed in the event rented equipment fails to work to its full potential. Patent Document 1 provides no disclosure related to renewing of a contract for rented equipment.

The present disclosure therefore aims to provide an information processing device, a method of offering a contract, and an information processing system for offering a new contract to a user using rental equipment at present.

### [Means for solving the problem]

A first example of the present disclosure provides an information processing device having a control part. The control part is configured to: obtain contract information about rental equipment rented to a user; obtain operation information about operation of the rental equipment; and offer a new contract for the user based on the contract information and the operation information.

According to the first example of the present disclosure, it is possible to provide an information processing device for offering a new contract to a user using rental equipment at present.

A second example of the present disclosure provides the information processing device of the first example, in which content of the new contract for the user is: an extension of a rental of the rental equipment; or a new rental to provide new rental equipment for replacement.

According to the second example of the present disclosure, an extension of the current rental of equipment, or a new rental to replace the old rental equipment with new rental equipment, can be offered as the content of a new contract. Also, according to the second example of the present disclosure, the rental equipment can be used without making the user suffer disadvantages such as failures of the equipment during the contract period.

A third example of the present disclosure provides the information processing device of the second example, in which the contract information includes information about a type of business where the rental equipment is used, and in which the operation information includes: information about maintenance of the rental equipment; information about operating time of the rental equipment; or information about power consumption of the rental equipment.

According to the third example of the present disclosure, a new contract can be offered to the user based on information about the type of business where the rental equipment is used, information about the maintenance of the rental equipment, information about the operating time of the rental equipment, or information about the power consumption of the rental equipment.

A fourth example of the present disclosure provides the information processing device of the third example, in which, when a number of times that a component of the rental equipment has been cleaned or washed, the number being included in the information about maintenance of the rental equipment, exceeds a predetermined number, an extension of the rental of the rental equipment is offered.

According to the fourth example of the present disclosure, if the number of times that a component of the rental equipment is cleaned or washed, which is included in the information about the maintenance of the rental equipment, exceeds a predetermined number, an extension of the current rental of equipment is offerable to the user as the content of a new contract. Also, according to the fourth example of the present disclosure, it is possible to prevent rental equipment that can be used as is from being discarded, thereby contributing to environmental issues.

A fifth example of the present disclosure provides an information processing device of the third or fourth example, in which, when information about failures of the rental equipment, included in the information about maintenance of the rental equipment, indicates that the rental equipment failed during a rental period, the new rental is offered.

According to the fifth example of the present disclosure, if the information about failures of the rental equipment, included in the information about the maintenance of the rental equipment, indicates that the rental equipment failed during the rental period, a rental of new equipment is offerable to the user as the content of a new contract.

A sixth example of the present disclosure provides the information processing device of the fifth example, in which, when the information about failures of the rental equipment indicates that a specific component of the rental equipment has failed, the new rental is offered.

According to the sixth example of the present disclosure, if the information about failures of the rental equipment indicates that a specific component has failed, a rental of new equipment is offerable to the user as the content of a new contract.

A seventh example of the present disclosure provides the information processing device of any one of the third to sixth examples, in which, when the information about power consumption of the rental equipment indicates that a rate of increase in power consumption is greater than or equal to a predetermined amount, the new rental is offered.

According to the seventh example of the present disclosure, if the power consumption information of the rental equipment indicates a rate of increase in power consumption that is greater than or equal to a predetermined amount, a rental of new equipment is offerable to the user as the content of a new contract.

An eighth example of the present disclosure provides the information processing device of any one of the third to seventh examples, in which, when the information about the type of business where the rental equipment is used indicates a predetermined type of business, the new rental is offered.

According to the eighth example of the present disclosure, if the information about the type of business where the rental equipment is used indicates a predetermined type of business, a rental of new equipment is offerable to the user as the content of a new contract.

A ninth example of the present disclosure provides the information processing device of the eighth example, in which the predetermined type of business is a type of business in which the rental equipment is likely to get dirty or a type of business in which operating load of the rental equipment is likely to be high.

According to the ninth example of the present disclosure, if the information about the type of business where the rental equipment is used indicates a type of business in which the rental equipment is likely to get dirty or a type of business in which the operating load of the rental equipment is likely to be high, a rental of new equipment is offerable to the user as the content of a new contract.

A tenth example of the present disclosure provides the information processing device of any one of the third to ninth examples, in which: the information about failures of the rental equipment, included in the information about maintenance of the rental equipment, indicates that the rental equipment failed a predetermined number of times or more during a rental period; the information about failures of the rental equipment indicates that a specific component of the rental equipment has failed; or the information about power consumption of the rental equipment indicates that a rate of increase in power consumption is greater than or equal to a predetermined amount.

According to the tenth example of the present disclosure, if the information about failures of the rental equipment indicates that the rental equipment failed a predetermined number of times or more during the rental period, if the information about failures of the rental equipment indicates that a specific component has failed, or if the information about power consumption of the rental equipment indicates a rate of increase in power consumption that is greater than or equal to a predetermined amount, a new rental can be offered before the current contract period expires.

An eleventh example of the present disclosure provides the information processing device of any one of the third to tenth examples, in which the user who is renting the rental equipment and to whom the extension of the rental of the rental equipment is offerable when a contract period specified in the contract information expires is notified that the extension of the rental of the rental equipment is possible.

According to the eleventh example of the present disclosure, a user to whom an extension of the current rental of equipment is offerable when the current contract period expires can be notified that an extension of the current rental of equipment is offerable.

A twelfth example of the present disclosure provides the information processing device of any one of the first to eleventh examples, in which the rental equipment is an air conditioner.

A thirteenth example of the present disclosure is a method of offering a contract executed by a control part of an information processing device. The method includes: obtaining contract information about rental equipment rented to a user; obtaining operation information about operation of the rental equipment; and offering a new contract for the user based on the contract information and the operation information.

According to the thirteenth example of the present disclosure, it is possible to provide a method of offering a new contract's content to a user using rental equipment at present.

A fourteenth example of the present disclosure provides an information processing system, in which an information processing device and an information processing terminal are communicably coupled, and in which a control part provided in the information processing device or the information processing terminal is configured to: obtain contract information about rental equipment rented to a user; obtain operation information about operation of the rental equipment; and display and offer content of a new contract for the user, on the information processing terminal, based on the contract information and the operation information.

According to the fourteenth example of the present disclosure, it is possible to provide an information processing system for offering new contract's content to a user using rental equipment at present.

### [Brief Description of the Drawings]

[FIG. 1] FIG. 1 is a diagram showing an example structure of an information processing system according to an embodiment of the present disclosure;
[FIG. 2] FIG. 2 is a diagram showing an example hardware structure of a computer according to the present embodiment;
[FIG. 3] FIG. 3 is an example flowchart of how the information processing system according to the present embodiment offers an equipment rental contract;
[FIG. 4] FIG. 4 is a flowchart showing an example of step S12;
[FIG. 5] FIG. 5 is an example flowchart of how the information processing system according to the present embodiment offers an equipment rental contract; and
[FIG. 6] FIG. 6 is a flowchart of how the information processing system according to the present embodiment offers an equipment rental contract.

### DETAILED DESCRIPTION OF THE PREFERRED EMBODIMENTS

Embodiments of the present disclosure will be described in detail below.

### [First embodiment]

### <System Structure>

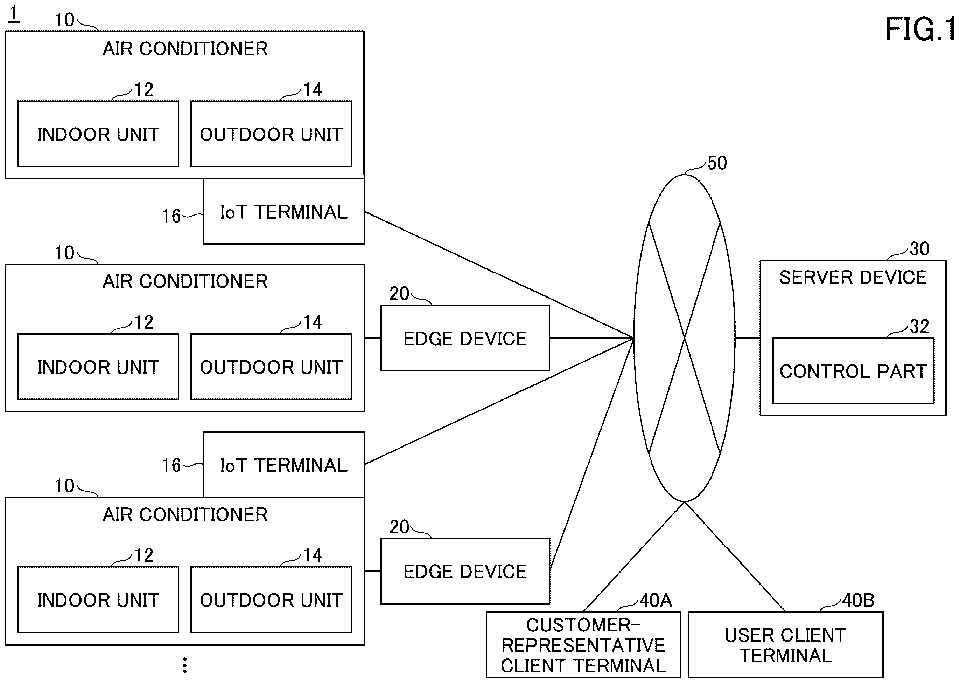

FIG. 1 is a diagram showing an example structure of an information processing system 1 according to an embodiment of the present disclosure. The information processing system 1 includes air conditioners 10, IoT terminals 16, edge devices 20, a server device 30, a customer-representative client terminal 40A, and a user client terminal 40B.

Each air conditioner 10 has an indoor unit 12 and an outdoor unit 14. The uppermost air conditioner 10 shown in FIG. 1 illustrates an example in which air conditioning equipment data is transmitted from the IoT terminal 16 to the server device 30. The IoT terminal 16, using an IoT (Internet of Things) system or the like, is communicably coupled to the server device 30 via a network 50. For example, the IoT terminal 16 is connected to the outdoor unit 14. The IoT terminal 16 transmits the air conditioning equipment data, obtained from the air conditioner 10, to the server device 30.

The air conditioner 10 shown in the middle of FIG. 1 illustrates an example, in which air conditioning equipment data is transmitted from the edge device 20 to the server device 30. The edge device 20 is communicably coupled to the server device 30 via the network 50. The edge device 20 is communicably coupled to the air conditioner 10 via a dedicated communication channel or the like. The edge device 20 transmits the air conditioning equipment data, obtained from the air conditioner 10, to the server device 30.

FIG. 1 also shows an example in which the lowermost air conditioner 10 transmits air conditioning equipment data from the IoT terminal 16 and the edge device 20, to the server device 30. The IoT terminal 16 and the edge device 20 transmit, to the server device 30, the air conditioning equipment data obtained from the air conditioner 10.

The number of indoor units 12 and outdoor units 14 included in the air conditioners 10 in FIG. 1 is one example. The indoor unit 12 and outdoor unit 14 included in each air conditioner 10 are communicably connected to each other. The air conditioners 10 are an example of rental equipment.

The server device 30 receives the air conditioning equipment data from the IoT terminals 16 or the edge devices 20, via the network 50. The server device 30 accumulates the received air conditioning equipment data, as operation information about the operation of the rental equipment. The server device 30 also receives information about the maintenance of the air conditioners 10, from the customer-representative client terminal 40A, via the network 50. The server device 30 accumulates the received maintenance information, as operation information about the operation of the rental equipment.

The server device 30 also receives information about the rental contract of the air conditioners 10, from the customer-representative client terminal 40A, via the network 50. The server device 30 may also receive information about the rental contract of the air conditioners 10, from the user client terminal 40B, via the network 50. The server device 30 accumulates the received information about the rental contract of the air conditioners 10, as contract information of the rental equipment.

As will be described below, the server device 30 offers the user a new contract based on the accumulated operation information about the operation of the rental equipment and the contract information of the rental equipment.

The customer-representative client terminal 40A is an information processing terminal that is operated by a customer representative who handles contracts for rentals of air conditioners 10 (for example, a worker who offers a rental contract for air conditioners 10 to a user, a worker who inputs contract information about the rental contract for air conditioners 10, etc.). The customer-representative client terminal 40A receives, as an input, contract information related to the rental contract of the air conditioners 10, and transmits this received information to the server device 30. In addition, the customer-representative client terminal 40A receives, as an input, information about the maintenance of the air conditioners 10 and transmits this received information to the server device 30.

In addition, the customer-representative client terminal 40A displays the content of a new contract for the user, prepared by the server device 30, and sends a notice to the customer representative. For example, the customer-representative client terminal 40A may be an information processing terminal such as a PC (Personal Computer), a smartphone, or a tablet terminal.

The user client terminal 40B is an information processing terminal that is operated by, for example, a user renting an air conditioner 10 at present. The user client terminal 40B displays the content of the new contract for the user, prepared by the server device 30, and sends notice to the user. The user client terminal 40B may also receive, as an input, contract information related to rental contracts for air conditioners 10, from the user, and transmit it to the server device 30. For example, the user client terminal 40B may be an information processing terminal such as a PC, a smartphone, or a tablet terminal.

The server device 30 has a control part 32. The control part 32 is a hardware structure for running programs, and may be a central processing unit (CPU), an application-specific integrated circuit (ASIC), a field programmable gate array (FPGA), etc. For example, the server device 30 can execute various processes described below by running programs on a CPU.

The structure of the information processing system 1 of FIG. 1 is one example. For example, the server device 30 may be implemented by one or more information processing devices. Also, the server device 30 may be implemented as a cloud computing service. Obviously, there are various examples of system structures that may be applied to the information processing system 1 of FIG. 1, depending on the application or the purpose of use.

### <Hardware Structure>

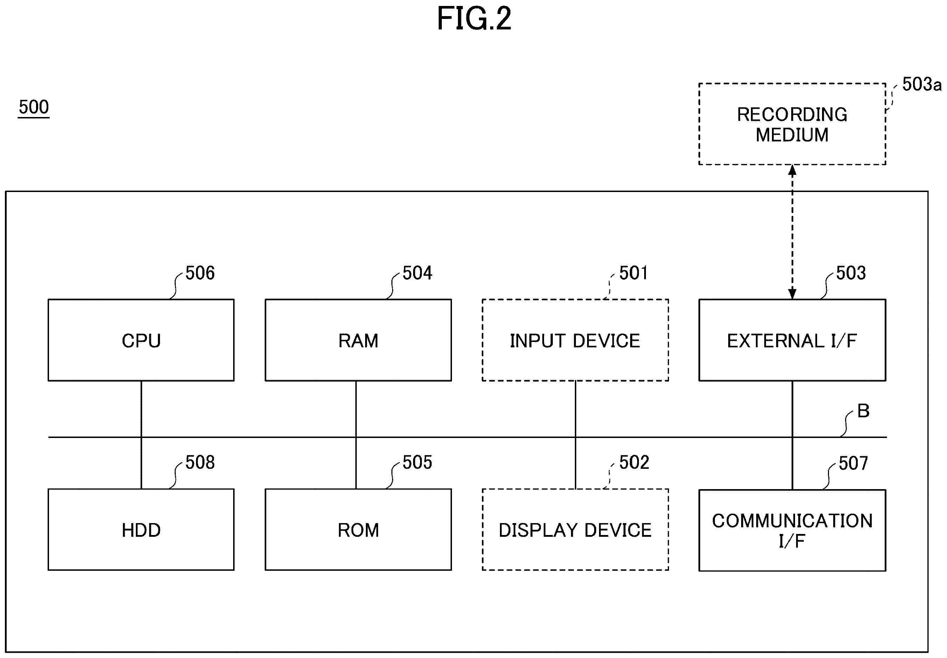

The server device 30 in FIG. 1 is implemented by, for example, a computer 500 having the hardware structure shown in FIG. 2. FIG. 2 is a diagram showing an example hardware structure of the computer 500 according to the present embodiment.

The computer 500 includes an input device 501, a display device 502, an external I/F 503, a RAM (Random Access Memory) 504, a ROM (Read Only Memory) 505, a CPU 506, a communication I/F 507, and an HDD (Hard Disk Drive) 508, all of which are connected to each other via a bus B. The input device 501 and the display device 502 may be connected and used only when necessary.

The input device 501 may be a touch panel, operation keys, buttons, a keyboard, a mouse, and so forth that the customer representative uses to input various signals. The display device 502 is formed with a display such as a liquid crystal or organic EL display for displaying a screen, and a speaker for outputting sound data such as voice, sound, and music. The communication I/F 507 is an interface for allowing the computer 500 to perform data communication via the network 50.

The HDD 508 is an example of a nonvolatile memory device that stores programs and data. The stored programs and data include an OS (Operating System), which is basic software that controls the entire computer 500, and applications that enable various functions on the OS. Note that the computer 500 may use a drive device (for example, a solid-state drive: SSD) that uses a flash memory as a storage medium, instead of the HDD 508.

The external I/F 503 is an interface with external devices. The external devices include, for example, a recording medium 503a. This allows the computer 500 to read and write data from and to the recording medium 503a via the external I/F 503. The recording medium 503a may be, for example, a flexible disk, a CD (Compact Disc), a DVD (Digital Versatile Disc), an SD (Secure Digital) memory card, a USB (Universal Serial Bus) memory, and so forth.

The ROM 505 is an example of a nonvolatile semiconductor memory (memory device) that can retain programs and data even when its power is turned off. The ROM 505 stores programs and data such as a basic input output system (BIOS) that runs when the computer 500 is started up, OS settings, and network settings. The RAM 504 is an example of a volatile semiconductor memory (memory device) that retains programs and data on a temporary basis.

The CPU 506 is a calculation device that reads programs and data from memory devices such as the ROM 505 and HDD 508, onto the RAM 504, and executes processes, thereby enabling the overall control and functions of the computer 500. The CPU 506 is an example of the control part 32.

### <Processes>

The control part 32 of the server device 30 obtains information about the operation of the air conditioners 10, which are an example of rental equipment, and stores this information in a memory device. The operation information of the air conditioners 10 includes air conditioning equipment data output from the air conditioners 10 or the IoT terminals 16. The air conditioning equipment data output from the air conditioners 10 or the IoT terminals 16 includes information about the operating time of the indoor unit 12 (fan operating time information).

Furthermore, the air conditioning equipment data output from the air conditioners 10 or the IoT terminals 16 includes: information about the operating time of the outdoor unit 14 (the compressor's operating time information); information about power consumption (information indicating the power consumption per predetermined period of time); or information about the components. The control part 32 can calculate information about changes in power consumption from past and present power consumption information. Information about changes in power consumption may be included in the air conditioning equipment data output from the air conditioners 10 or the IoT terminals 16.

The component information includes, for example: information about the number of times the four-way valve is switched; information about the degree of the motor valve's opening; information about the motor valve's pressure loss; information about the compressor's current; and information about the heat exchanger's pressure loss. The information about the degree of the motor valve's opening and the information about the motor valve's pressure loss can be used to detect the accumulation of dust on the filter inside the motor valve.

Furthermore, the operation information of the air conditioners 10 includes maintenance information, which is transmitted from the customer-representative client terminal 40A. The maintenance information includes: information about failures; information about the replacement of components; or information about cleaning/washing. The information about failures includes: failure history information, which records the history of failures; or repair history information, which records the history of repairs. The information about the replacement of components keeps record of components of the air conditioners 10 that have been replaced. The information about cleaning/washing keeps record of the cleaning and washing of the heat exchanger, filter, drain pan, etc. The information about cleaning/washing may keep record of cleaning service that has been delivered.

The control part 32 obtains information about the contract for the air conditioners 10, which are an example of rental equipment, and stores the obtained information in a memory device. The information about the contract for the air conditioners 10 includes: information about the contractor; information about the model that is rented; information about the place where the air conditioners 10 are used; information about the type of business in which the air conditioners 10 are used; information about the date of contract; information about the period of contract; and information about the date that the contract expires. The information about the place where the air conditioners 10 are used indicates, for example, whether or not the place where the air conditioners 10 are used is a specific area such as a geographical area susceptible to damage caused by airborne salt particles. The information about the type of business where the air conditioners 10 are used indicates, for example, whether or not the type of business where the air conditioners 10 are used is a specific type of business such as a beauty salon or a restaurant.

The control part 32 determines the content of a new contract to offer to the user based on the information about the operation of the air conditioners 10 and the information about the current contract of the air conditioners 10, which are stored in the memory device. The new contract's content that the control part 32 determines here may include whether or not to offer to the user an extension of the current rental of the air conditioners 10, whether or not to offer a new rental to replace the old air conditioners 10, and so forth. The new contract's content that the control part 32 determines here also includes whether or not to offer a new rental to replace the old air conditioners 10 before the period of the current contract included in the contract information expires.

The control part 32 receives as an input a request for an offer of a contract from the customer-representative client terminal 40A or from the user client terminal 40B, and then determines the content of a new contract to offer to the user. The control part 32 reports the content of the new contract determined to be offered to the user by displaying it on the customer-representative client terminal 40A or on the user client terminal 40B. The control part 32 may send the content of the new contract determined to be offered to the user, to the customer representative or to the user by email.

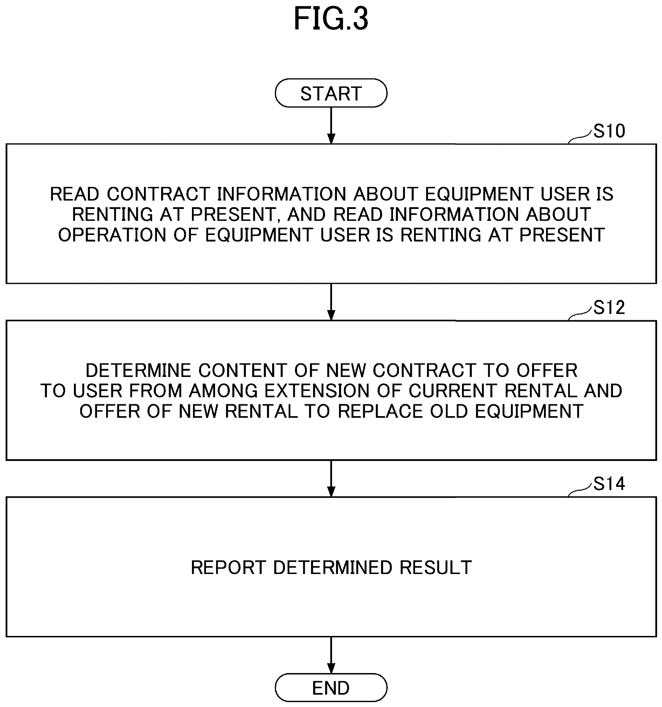

The information processing system 1 of FIG. 1 determines the content of the new contract to offer to the user renting the air conditioners 10 at present, for example, at the timing the current contract's period expires, as shown in FIG. 3. FIG. 3 is an example flowchart of how the information processing system 1 according to the present embodiment offers an equipment rental contract.

In step S10, the server device 30 reads information about the current contract of the air conditioners 10 rented by the user to whom the new contract is to be offered. The server device 30 also reads operation information of the air conditioners 10 rented by the user to whom the new contract is to be offered.

In step S12, the server device 30 determines the content of the new contract to be offered to the user based on the contract information and operation information read in step S10. For example, if the performance of the air conditioners 10 during the rental period is good and there is a low possibility that problems will occur even if the air conditioners 10 are continued to be used, the server device 30 determines to extend the current rental without replacing the old air conditioners 10, and offers the extension, as the content of the new contract to offer to the user. Furthermore, for example, if the performance of the air conditioners 10 during the rental period indicates that there is a high possibility that problems will occur if the air conditioners 10 are continued to be used, the server device 30 determines to offer a new rental that replaces the old air conditioners 10, as the content of the new contract to offer to the user.

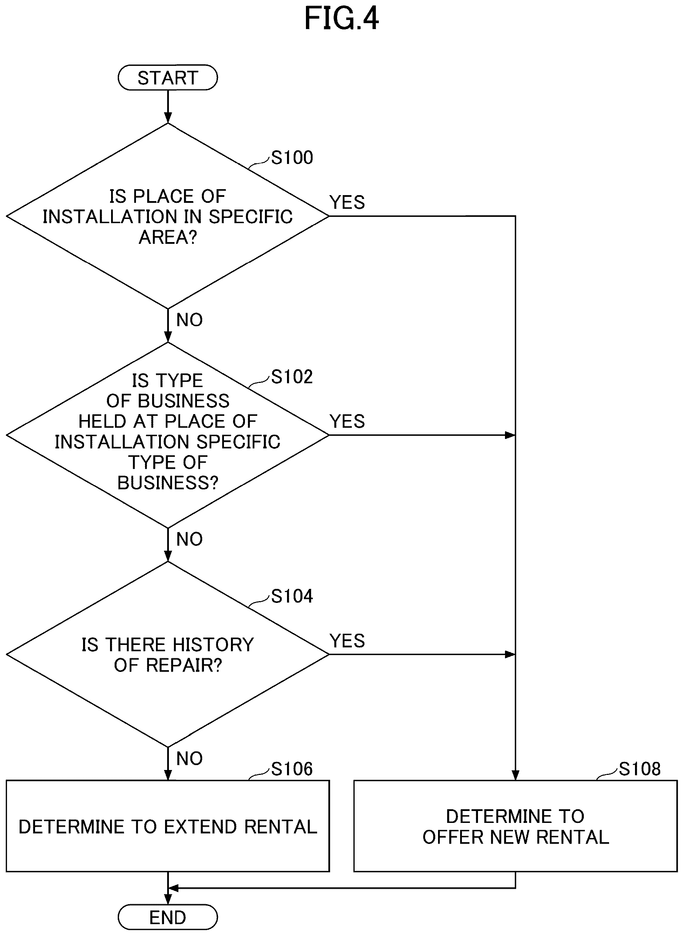

FIG. 4 is a flowchart of an example of step S12. In step S100, the server device 30 determines whether or not the information about the place where the air conditioners 10 are used, included in the contract information, indicates a specific area such as an area under salinity. If the information about the place where the air conditioners 10 are used indicates a specific area such as an area under salinity, the server device 30 determines in step S108 to offer a new rental to the user as the content of a new contract. If the information about the place where the air conditioners 10 are used does not indicate a specific area such as an area under salinity, the server device 30 proceeds to step S102.

In step S102, the server device 30 determines whether the information about the type of business where the air conditioners 10 are used, included in the information about the current contract for the air conditioners 10, indicates a specific type of business such as a beauty salon, a restaurant, or a factory. If the information about the type of business at the place where the air conditioners 10 are used indicates a specific type of business such as a beauty salon, a restaurant, or a factory, the server device 30 determines to offer a new rental to the user in step S108 as the content of a new contract. If the information about the type of business at the place where the air conditioners 10 are used does not indicate a specific type of business such as a beauty salon, a restaurant, or a factory, the server device 30 proceeds to step S104. A beauty salon or a restaurant is an example of business in which the air conditioners 10 are likely to get dirty. A factory is an example of business in which the operating load of the air conditioners 10 is likely to be high.

In addition, in step S104, the server device 30 determines whether or not the operation information of the air conditioners 10 includes, for example, failure information that records the history of repairs of the air conditioners 10. If the operation information of the air conditioners 10 includes failure information that records the history of repairs of the air conditioners 10, the server device 30 determines to offer a new rental to the user as the content of a new contract in step S108. If the operation information of the air conditioners 10 does not include failure information that records the repair history of the air conditioners 10, the server device 30 determines to extend the current rental in step S106. Note that the flowchart in FIG. 4 is an example, and it is not necessary to make all the determinations in steps S100, S102, and S104. That is, it is sufficient as long as at least one determination is made.

Also, the determinations in step S100, S102, and S104 of FIG. 4 are examples. For example, when the operation information includes a predetermined number or more pieces of failure information in which the history of repairs of the air conditioners 10 is recorded, the server device 30 may then determine to offer a new rental to the user as the content of a new contract.

Furthermore, the server device 30 may determine to offer a new rental to the user as the content of a new contract when, for example, the operation information includes information about failures of a specific component, or a motor valve). The server device 30 may determine to offer a new rental to the user as the content of a new contract if, for example, the operation information includes a predetermined number or more of pieces of failure information that indicates failure of a specific component.

In addition, for example, if the operating time information of the air conditioners 10, included in the operation information, indicates an operating time that is longer than a specific period of time (such as the compressor's recommended operating time), the server device 30 may determine to offer a new rental to the user as the content of a new contract.

In addition, the server device 30 may determine to offer a new rental to the user as the content of a new contract when, for example, the power consumption information included in the operation information of the air conditioners 10 indicates a rate of increase in power consumption beyond a predetermined percentage. For example, the server device 30 may determine to offer a new rental to the user as the content of a new contract if one of: the power consumption at the same capacity (same load) as the previous year; the APF (Annual Performance Factor) throughout the year; and the COP (Coefficient of Performance) has deteriorated by a predetermined percentage (for example, 150) or more. If saving on electricity costs by replacing the air conditioners 10 with new ones can provide a greater advantage to the user than extending the current rental without replacing the old air conditioners 10, the server device 30 may determine to offer a new rental to the user as the content of a new contract.

Furthermore, the server device 30 may determine to offer a new rental to the user as the content of a new contract when, for example, the number of times the four-way valve has been switched, which is included in the operation information, is greater than or equal to a limit number of times of switching. The server device 30 may also determine to offer a new rental to the user as the content of a new contract when, for example, the motor valve's pressure loss, included in the operation information, is greater than or equal to a predetermined percentage of the pressure loss at the same degree of opening. If there is a high possibility that the air conditioners 10 will fail or break down during the next rental period if the current rental is extended without replacing the air conditioners 10, the server device 30 may determine to offer a new rental to the user as the content of a new contract.

Furthermore, the server device 30 may check the information about the maintenance of the air conditioners 10 included in the operation information. If, for example, the number of times a component of the air conditioners 10 has been cleaned or washed exceeds a certain number of times, the server device 30 determines to offer an extension of the current rental to the user, without replacing the old air conditioners 10, as the content of a new contract. For example, if the number of times a component of the air conditioners 10 has been cleaned or washed is greater than or equal to the years of the contract, the server device 30 may determine to offer an extension of the current rental to the user, without replacing the old air conditioners 10, as the content of a new contract.

In addition, the content of the new contract determined to be offered to the user in step S12 may be one of the above-described examples or a combination of the above-described examples. In step S14, the server device 30 sends a notice about the content of the new contract determined to be offered to the user, to the customer representative or to the user.

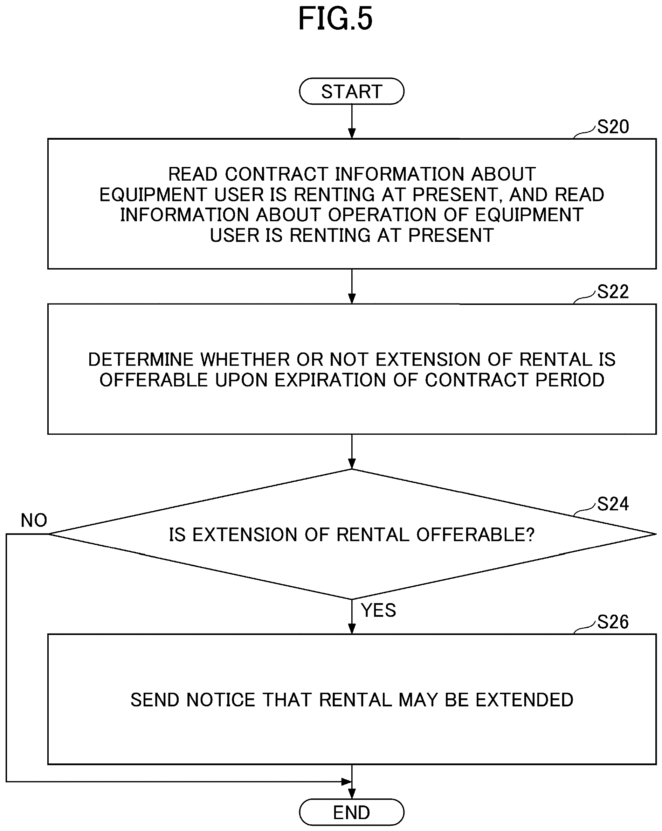

The information processing system 1 of FIG. 1 may send, to the user currently renting the air conditioners 10, a notice to the effect that the current rental can be extended without replacement of the old air conditioners 10, upon expiration of the current contract period, as shown in, for example, FIG. 5. Extending the current rental without replacing the old air conditioners 10 is a contract that can provide benefits to the user, such as a lower fee.

FIG. 5 is an example flowchart of how the information processing system 1 according to the present embodiment offers an equipment rental contract. The flowchart in FIG. 5 is performed per predetermined period of time (for example, every month).

In step S20, the server device 30 reads contract information pertaining to the user renting the air conditioners 10 at present. The server device 30 also reads operation information of the air conditioners 10 that the user is currently renting.

Based on the contract information and operation information read in step S20, in subsequent step S22, the server device 30 determines whether an extension of the current rental is offerable, without replacement of the old air conditioners 10, upon expiration of the current contract period, as in the example described above.

For example, assume that the performance of the air conditioners 10 during the rental period is good and an extension of the current rental, which does not replace the old air conditioners 10, is available to the user upon expiration of the current contract period if the user continues using the air conditioners 10 as is. The server device 30 then determines that an extension of the current rental is offerable, without replacement of the old air conditioners 10, upon expiration of the current contract period.

On the other hand, for example, assume that the performance of the air conditioners 10 during the rental period is poor and it is better not to offer the user an extension of the current rental without replacement of the air conditioners 10 upon expiration of the current contract period. The server device 30 then determines not to offer an extension of the current rental without replacement of the air conditioners 10 upon expiration of the current contract period.

The server device 30 may, for example, check the information about the maintenance of the air conditioners 10 rented by the user at present. If the information shows that a component of the air conditioners 10 has been cleaned or washed more frequently than a certain rate, the server device 30 may then determine that an extension of the current rental without replacement of the old air conditioners 10 can be offered when the current contract period expires.

In step S24, if the server device 30 determines that an extension of the current rental is offerable, without replacement of the air conditioners 10, upon expiration of the current contract period, the server device 30 performs step S26. In step S26, the server device 30 sends, to the user, a notice to the effect that an extension of the current rental, which does not replace the air conditioners 10, but which provides advantages to the user such as a lower fee if the user continues using the air conditioners 10 as is, is available to the user upon expiration of the current contract period.

The notice may be sent to the user by email, or may be sent to the user in the form of a usage report of the air conditioners 10. The user can learn that he/she can choose an extension of the current rental, as the content of a new contract, which provides advantages to the user such as a lower fee, and which motivates the user to clean or wash the components of the air conditioners 10.

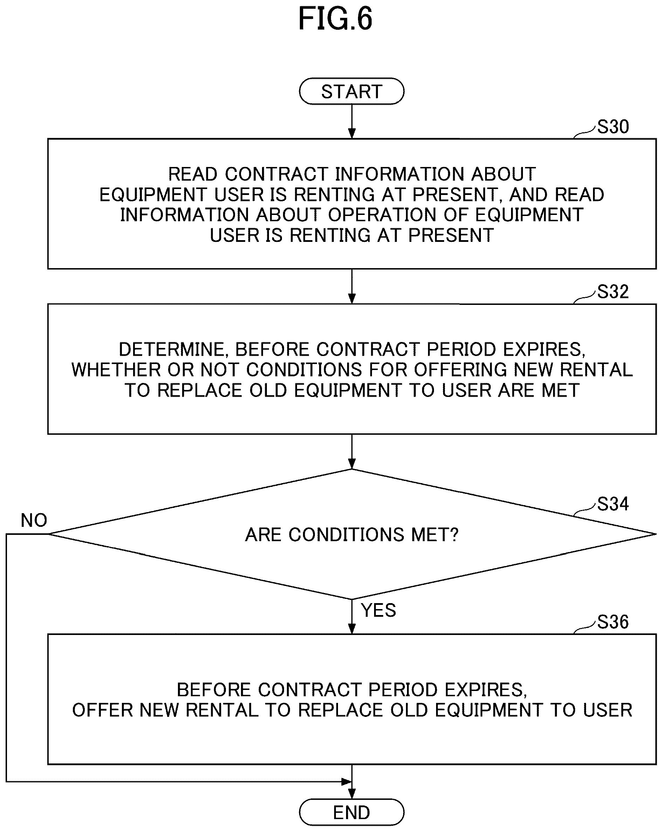

The information processing system 1 of FIG. 1 may offer, to a user renting the air conditioners 10 at present, a new rental to replace the currently-rented air conditioners 10, before the current contract period expires, as shown in FIG. 6, for example. The new rental offered to the user in FIG. 6 is a contract that is offered when, for example, based on the performance of the air conditioners 10 during the rental period, it is more advantageous for the user to replace the current air conditioners 10 than continue using the currently-rented air conditioners 10 until the current contract period expires.

FIG. 6 is an example flowchart of how the information processing system 1 according to the present embodiment offers an equipment rental contract. The flowchart of FIG. 6 is performed every predetermined period of time (for example, every month).

In step S30, the server device 30 reads contract information pertaining to the user renting the air conditioners 10 at present. The server device 30 also reads operation information of the air conditioners 10 that the user is currently renting.

In step S32, based on the contract information and operation information read in step S30, the server device 30 determines whether the conditions for offering the user a rental of new air conditioners 10 to replace the current air conditioners 10 before the current contract period expires are met as in the example above.

For example, when the operation information contains a predetermined number or more of pieces of failure information recording the history of repairs of the air conditioners 10, when the operation information contains a predetermined number or more of pieces of failure information for a specific component, or when the power consumption information contained in the operation information for the air conditioners 10 indicates a rate of increase in power consumption beyond a predetermined percentage, the server device 30 determines that the conditions for offering the user a rental of new air conditioners 10 are met.

In step S34, if the server device 30 determines that the conditions for offering the user a new rental to replace the current air conditioners 10 before the current contract period expires are met, the server device 30 performs step S36. In step S36, the server device 30 offers the user a new rental to replace the current air conditioners 10 before the current contract period expires if it is more advantageous for the user to re-contract for a new rental to replace the current air conditioners 10 even before the current contract period expires than continue using the current air conditioners 10 as is.

The offer may be sent to the user by email, may be sent to the user in the form of a usage report of the air conditioners 10, and so on. The user may be able to realize that it would be more advantageous to re-contract for a new rental before the current contract period expires, than continue using the current air conditioners 10 until the current contract period expires.

The server device 30 can report the content of this new contract that is beneficial to the user, to the customer representative who handles contracts for rentals of air conditioners 10 or to the user renting air conditioners 10 at present, by displaying it on a screen.

Therefore, according to the information processing system 1 of the present embodiment, it is possible to offer a new contract that benefits the user renting the air conditioners 10 at present, based on the performance of the air conditioners 10 during the rental period.

According to the information processing system 1 of the present embodiment, not only is it possible to offer a new rental to replace the current air conditioners 10 when the current contract period expires, but it is also possible to offer an extension of the current rental period without replacing the old air conditioners 10 if it benefits the user more. In this way, according to the information processing system 1 of the present embodiment, it is possible to provide an information processing device, a method of offering a contract, and an information processing system for offering a new contract to a user renting the air conditioners 10 at present. Also, according to the information processing system 1 of the present embodiment, it is possible to improve environmental issues by managing the air conditioners 10 that would have been discarded in the past, such that they can be used for a longer period of time.

### [Effects]

The present embodiment thus provides an information processing device having a control part, and the control part obtains contract information about rental equipment rented to a user at present, obtains operation information about the operation of the rental equipment, and offers the user a new contract based on the contract information and the operation information. The control part is, for example, the control part 32. The information processing device is, for example, the server device 30. The rental equipment is, for example, the air conditioners 10.

According to the present embodiment, it is possible to provide an information processing device for offering a new contract to a user using rental equipment at present, based on contract information and operation information.

Also, according to the present embodiment, the content of the new contract offered to the user is an extension of the current rental of equipment, or a new rental that replaces the currently-rented equipment with new rental equipment.

According to the present embodiment, it is possible to provide an information processing device for offering, as the content of a new contract, an extension of the current rental of equipment, or a new rental that replaces the currently-rented equipment with new rental equipment, based on contract information and operation information.

Also, according to the present embodiment, the contract information includes information about the type of business where the rental equipment is used, and the operation information includes: information about the maintenance of the rental equipment; information about the operating time of the rental equipment; or information about the power consumption of the rental equipment.

According to the present embodiment, it is possible to provide an information processing device for offering a new contract to a user based on: information about the type of business where the rental equipment is used; information about the maintenance of the rental equipment; information about the operating time of the rental equipment; or information about the power consumption of the rental equipment.

Also, according to the present embodiment, if the number of times a component of the rental equipment has been cleaned or washed, which is included in the information about the maintenance of the rental equipment, exceeds a certain number of times, an offer to extend the rental period of the currently-rented equipment can be made.

According to the present embodiment, it is possible to provide an information processing device for offering an extension of the current rental of equipment as the content of a new contract for the user if the number of times a component of the rental equipment has been cleaned or washed, which is included in the information about the maintenance of the rental equipment, exceeds a predetermined number.

Furthermore, according to the present embodiment, if information about failures of rental equipment, which is included in information about the maintenance of the rental equipment, indicates that the rental equipment failed during the rental period, a new rental is offered.

According to the present embodiment, it is possible to provide an information processing device that, if information about failures of rental equipment, which is included in the information about the maintenance of the rental equipment, indicates that the rental equipment failed during the rental period, offers a new rental of equipment as the content of a new contract for the user.

Also, according to the present embodiment, if the information about failures of the rental equipment indicates that a specific component of the rental equipment has failed, a new rental is offered.

According to the present embodiment, it is possible to provide an information processing device that, if the information about failures of rental equipment indicates that a specific component has failed, offers a new rental of equipment as the content of a new contract for the user.

Furthermore, according to the present embodiment, if the information about the power consumption of the rental equipment indicates a rate of increase in power consumption that is greater than or equal to a predetermined amount, a new rental is offered.

According to the present embodiment, if the information about the power consumption of the rental equipment indicates a rate of increase in power consumption that is greater than or equal to a predetermined amount, it is possible to provide an information processing device for offering a new rental of equipment as the content of a new contract for the user.

Additionally, according to the present embodiment, a new rental is offered if the information about the type of business where the rental equipment is used indicates a predetermined type of business.

According to the present embodiment, it is possible to provide an information processing device for offering a new rental of equipment as the content of a new contract for the user if the information about the type of business where the rental equipment is used indicates a predetermined type of business.

According to the present embodiment, the predetermined type of business is a type of business in which the rental equipment is likely to get dirty or a type of business in which the operating load of the rental equipment is likely to be high.

According to the present embodiment, it is possible to provide an information processing device for offering a new rental of equipment as the content of a new contract for the user if the information about the type of business where the rental equipment is used indicates that the business is a type in which the rental equipment is likely to get dirty or a type in which the operating load of the rental equipment is likely to be high.

In addition, according to the present embodiment, if the information about failures of the rental equipment, which is included in the information about the maintenance of the rental equipment, indicates that the rental equipment failed a predetermined number of times or more during the rental period, if the information about failures of the rental equipment indicates that a specific component has failed, or if the information about the power consumption of the rental equipment indicates a rate of increase in power consumption that is greater than or equal to a predetermined amount, a new rental is offered before the period of the current contract included in the contract information expires.

According to the present embodiment, it is possible to provide an information processing device for offering a new rental before the current contract period expires if the information about failures of the rental equipment indicates that the rental equipment failed a predetermined number of times or more during the rental period, if the information about failures of the rental equipment indicates that a specific component has failed, or if the information about the power consumption of the rental equipment indicates a rate of increase in power consumption that is greater than or equal to a predetermined amount.

In addition, according to the present embodiment, a user who is currently using rental equipment and to whom an extension of the current rental of equipment may be offered when the current contract period included in the contract information expires is notified that the current rental of equipment can be extended.

According to the present embodiment, it is possible to provide an information processing device that notifies a user, to whom an extension of the current rental of equipment may be offered, that the current rental of equipment can be extended when the current contract period expires.

According to the present embodiment, the rental equipment is air conditioners 10.

According to the present embodiment, it is possible to provide an information processing device for offering a new contract to the user renting air conditioners 10 at present, based on contract information and operation information.

Moreover, the present embodiment provides a method of offering a contract executed by a control part of an information processing device, and the control part obtains contract information about rental equipment rented to a user at present, obtains operation information about the operation of the rental equipment, and offers a new contract to the user based on the contract information and the operation information.

According to the present embodiment, it is possible to provide a method of offering a new contract to a user using rental equipment at present, based on contract information and operation information.

Moreover, the present embodiment provides an information processing system in which an information processing device and an information processing terminal are communicably coupled, and in which a control part provided in the information processing device or the information processing terminal: obtains contract information about rental equipment rented to a user at present; obtains operation information about operation of the rental equipment; and offers a new contract to the user based on the contract information and the operation information.

According to the present embodiment, it is possible to provide an information processing system for offering a new contract to a user using rental equipment at present, based on contract information and operation information.

Although an embodiment of the present disclosure has been described above, it should be understood that various changes in form and details are possible without departing from the spirit and scope of the accompanying claims. Although the present invention has been described above based on an embodiment, the present invention is not limited to the above embodiment, and various changes and alterations are possible within the scope of the accompanying claims. This application is based on claims priority to Japanese Patent Application No. 2023-39571, filed on March 14, 2023, the entire contents of which are incorporated herein by reference.

### [Explanation of symbols]

- 1: Information processing system
- 10: Air conditioner
- 12: Indoor unit
- 14: Outdoor unit
- 16: IoT terminal
- 20: Edge device
- 30: Server device
- 32: Control part
- 40A: Customer-representative client terminal
- 40B: User client terminal
- 50: Network

## Claims

1. An information processing device comprising a control part, wherein the control part is configured to:
obtain contract information about rental equipment rented to a user;
obtain operation information about operation of the rental equipment; and
offer a new contract for the user based on the contract information and the operation information.

2. The information processing device according to claim 1, wherein content of the new contract for the user is:
an extension of a rental of the rental equipment; or
a new rental to provide new rental equipment for replacement.

3. The information processing device according to claim 2,
wherein the contract information includes information about a type of business where the rental equipment is used, and
wherein the operation information includes:
information about maintenance of the rental equipment;
information about operating time of the rental equipment; or
information about power consumption of the rental equipment.

4. The information processing device according to claim 3, wherein, when a number of times that a component of the rental equipment has been cleaned or washed, the number being included in the information about maintenance of the rental equipment, exceeds a predetermined number, the extension of the rental of the rental equipment is offered.

5. The information processing device according to claim 3 or 4, wherein, when information about failures of the rental equipment, included in the information about maintenance of the rental equipment, indicates that the rental equipment failed during a rental period, the new rental is offered.

6. The information processing device according to claim 5, wherein, when the information about failures of the rental equipment indicates that a specific component of the rental equipment has failed, the new rental is offered.

7. The information processing device according to any one of claims 3 to 6, wherein, when the information about power consumption of the rental equipment indicates that a rate of increase in power consumption is greater than or equal to a predetermined amount, the new rental is offered.

8. The information processing device according to any one of claims 3 to 7, wherein, when the information about the type of business where the rental equipment is used indicates a predetermined type of business, the new rental is offered.

9. The information processing device according to claim 8, wherein the predetermined type of business is a type of business in which the rental equipment is likely to get dirty or a type of business in which operating load of the rental equipment is likely to be high.

10. The information processing device according to any one of claims 3 to 9,
wherein the information about failures of the rental equipment, included in the information about maintenance of the rental equipment, indicates that the rental equipment failed a predetermined number of times or more during a rental period;
wherein the information about failures of the rental equipment indicates that a specific component of the rental equipment has failed; or
wherein the information about power consumption of the rental equipment indicates that a rate of increase in power consumption is greater than or equal to a predetermined amount.

11. The information processing device according to any one of claims 3 to 10, wherein the user who is renting the rental equipment and to whom the extension of the rental of the rental equipment is offerable when a contract period specified in the contract information expires is notified that the extension of the rental of the rental equipment is possible.

12. The information processing device according to any one of claims 1 to 11, wherein the rental equipment is an air conditioner.

13. A method of offering a contract executed by a control part of an information processing device that includes the control part, the method comprising:
obtaining contract information about rental equipment rented to a user;
obtaining operation information about operation of the rental equipment; and
offering a new contract for the user based on the contract information and the operation information.

14. An information processing system, in which an information processing device and an information processing terminal are communicably coupled,
wherein a control part provided in the information processing device or the information processing terminal is configured to:
obtain contract information about rental equipment rented to a user;
obtain operation information about operation of the rental equipment; and
display and offer content of a new contract for the user, on the information processing terminal, based on the contract information and the operation information.
